# EUROPEAN PATENT SPECIFICATION

(11) **EP 3 141 160 B1**
(45) Date of publication and mention of the grant of the patent: **28.03.2018**
(21) Application number: 16188495.2
(22) Date of filing: 13.09.2016
(51) Int. Cl.: A47F 5/10

(54) **BASE FOR SHELVING AN METHOD FOR ITS PRODUCTION**
BASIS FÜR REGALE UND VERFAHREN ZU DEREN HERSTELLUNG
BASE DE RAYONNAGE, PROCÉDÉ POUR SA PRODUCTION

(30) Priority: 14.09.2015 IT UB20153601
(43) Date of publication of application: 15.03.2017
(73) Proprietor: CEFLA SOCIETA' COOPERATIVA, 40026 Imola (BO) (IT)
(72) Inventor: ALBERTAZZI, Alessandro, 40026 Imola (BO) (IT); PASSANTI, Andrea, 40026 Imola (BO) (IT)
(74) Representative: Karaghiosoff, Giorgio Alessandro

(56) References cited:
- EP-A1- 0 497 741
- DE-A1- 4 420 070
- DE-B- 1 110 117

## Description

The present invention relates to the technical field of shopfitting, and in particular to a component of shelving to display goods. More particularly, the invention relates to the manufacturing process of said component.

A shelving of the same kind is described in the application EP2807958A1 of the same applicant. Said shelving essentially comprises two bases to which two posts are fixed, a back panelling, and any number of shelves for displaying the goods on sale, each shelf being supported by a couple of brackets.

Said shelving are manufactured starting from metal sheet having a thickness of about 1,5 mm (0,5-2,5 mm), which is shaped, cut and welded to obtain the above-mentioned single components. Said components (bases, posts, back panelling, shelves, brackets) are manufactured in factory, and then assembled at the point of sale to obtain a shelving having the desired characteristics.

Typically, a base is manufactured by bending and welding a single metal sheet, so as to give to the base itself a given stability and capability of supporting loads. In the known art, the shaping of the metal sheet produces two counter posed strips of metal sheet and these strips are welded one to another using spot welding, with or without soldering filler materials; such welding is performed through a specific welding station.

Nonetheless, spot welding requires the presence of a specific welding station. Moreover, spot welding allows to obtain a base capable of supporting a load of 400-1300 kg.

In the case of spot welding, it is necessary to put close the two areas to be welded so that they are in contact with each other, and on the two spots which are in contact the welding is performed. This can be obtained in two ways: in the case of electric resistance welding, the two counterposed metal sheet are slightly distorted, spot by spot, in order to have them in contact, and on this distorted spots the welding is performed. In the case of soldering with filler material, the space to be soldered between the two spots is filled with filler material, which is then melted. The result is a base wherein a plurality of welding spots are present, which are clearly visible: in the first case a concavity, in the second case a convexity is visible. Moreover, the welding is performed aiming the welding torch perpendicularly with respect to the main extension of the metal sheet.

Laser beam welding can be used too, but this technique normally requires that the two metal sheet be in contact with each other, applying the laser beam welding in a direction perpendicular to the main extension of the two counterposed metal sheets or strips i.e. perpendicularly to the surfaces to be joined or bonded together . In this way, a laser seam welding is obtained. The laser beam heats up and melts the material, and therefore allows the two counterposed metal sheets or strips to weld.

Up to today, in the production line two welding stations used to be present: one spot welding station for manufacturing the bases, and a laser beam welding station for manufacturing the posts.

Document EP0497741 shows a boxed base for metallic shelving. The base is formed by a longitudinal or transverse beam having a tubular cross section composed by two half-shells which are connected together and which are obtained by folding of a metallic sheet. The beam is thus integer along a longitudinal lower side, while along the opposite side the two half-shells show facing strips to be connected each other having contact or bonding surfaces which are oriented essentially radially with respect to the longitudinal axis of the tubular or boxed section and/or optionally also parallel to the folding axis or to the folding edges. These contact or bonding surfaces close upwardly the boxed body of the beam and have an extension in a direction which is radial or perpendicular relatively to the longitudinal axis and an extension in a direction which is parallel to the said longitudinal axis, i.e. the axis of the tubular beam. The two strips are welded one to the other. No indicia is given in relation to which kind of welding process is used,
Document DE11101117 B discloses the manufacturing process of a tubular cross section obtained from a metal sheet bent along several bent lines and by welding simultaneously opposed strips of the bent metal sheet.

The above kind of welding however is a critical point for the stability and the strength of the structure, which in the case of shelving for professional use like in the supermarkets or the like has to resist to considerable loads and has also to satisfy high security standards in order to avoid yielding which can cause turnover of the shelves on the clients and thus damaging human beings.

The present invention seeks to provide a manufacturing method which allows to simplify and make the production line cheaper, thanks to the presence of a single beam welding station, which is used to weld both said bases and the posts which will be coupled to the base itself. A further aim is to allow the manufacture of a base having an improved resistance to loads, with respect to what can be obtained with a base manufactured through spot welding guaranteeing at the same time higher security and reliability.

This object is achieved by a method having the features of the independent claims. Advantageous embodiment and refinements are specified in the claims dependent thereon.

The solution consists in using also for the production of the shelving base, a welding process causing the melting of the material forming the contact surfaces along a welding axis or a welding band-like zone which are oriented along at least one of the two directions defining the said contact or bonding surfaces and causing the said welding axis or band-like zone to travel along the at least further direction of the said two directions defining the said contact or bonding surfaces with a certain speed and thus with certain shifting times.

Thanks to the above arrangements the welding of the material of the said two strips will reach at least for a part of the said contact or bonding surfaces along the said direction which is parallel to the said welding axis and for such a length which is bigger than the thickness of the metal sheet.

In order to generating the above defined melting action it is possible to use different welding techniques. Preferred welding techniques are the ones generating a beam or an arc or a flame or a plasma propagating along fixed axis or direction and which energy is mainly concentrated or localized along the said axis and in the vicinity of the said axis.

Typical and known welding techniques which can be used for generating the soldering action of the method according to the present invention are for example: lase welding, plasma welding, TIG (Tungsten Inert Gas) welding, GTAW welding, arc welding, AWS welding optionally also in combination with additional weld material.

Using for example a laser welding technique, the method of the present invention provides for orienting the welding laser beam in a direction that is parallel to the two contact or bonding surfaces of the counterposed strips of the metal sheets, namely the two facing metal strips generated by the shaping operation of the metal sheet for forming the base. This allows obtaining a welding area that can reach some mm of depth. Using this kind of welding, in the preferred embodiment a seam welding can be obtained for the whole base length, i.e. for the whole extension fo the contact surfaces in the direction parallel to the laser beam and or in the direction transverse to the laser beam. This kind of welding has demonstrated to have loading capabilities higher than the loading capabilities obtained through spot welding.

It is clear that similar effects can be obtained using instead of the laser welding one of the other welding techniques listed above or a similar welding technique in relation to the essential features of the welding action described above needed according to the present invention.

The welding seam or connection may be continuous also along the extension of the contact or bonding surfaces in the direction perpendicular to the optical axis of the laser beam or another electromagnetic beam, or perpendicular o the axis of propagation of an arc or aflame or a plasma or in the direction of displacement of the or traveling of the laser beam the arc, the flame, the plasma along the surfaces of connection or bonding in the direction parallel to the longitudinal axis of the three dimensional structure or to a folding axis of the said structure.

According to an alternative embodiment the welding seam may be discontinuous forming a line of welding zones of a certain length along the connecting or bonding surfaces in the direction of travelling or shift pf the laser beam, the arc, the flame or the plasma. The distance of the welding zones as also their length in the said traveling or shifting direction or in the direction parallel to the direction of propagation of the beam arc, flame or plasma may be equal for all the welding zones or may be different for at least some welding zones depending from the desired mechanical features of the structure or as a function of the loads to which different sections or parts of the structure has to resist.

Such differences in the areas of the welding zones and in their distance may be easily obtained by varying the traveling speed of the laser beam, the arc, the flame, the plasma along the connecting or bonding surfaces as a function of the position of the said laser beam, arc, flame, plasma in relation to the connecting surfaces and/or by applying a variable frequency for the off/on cycles of the welding tools generating the laser beam, the arc, the plasma, the flame or similar phenomenon.

The present invention allows to obtain different advantages:
The first advantage of the present invention consists in obtaining a production line wherein one welding station only is present, which in a preferred embodiment is a laser beam welding station.

A second advantage of the present invention consists in obtaining bases having an improved loading capacity, when the laser beam welding or the welding according to the above specified different alternative welding techniques is performed on the whole base length.

A third advantage of the present invention consists in an improved aesthetical appearance of the base itself, in that the welding is practically invisible from outside.

Further advantages derives from the improvements according to the dependent claims.

Further advantages and properties of the present invention are disclosed in the following description, in which exemplary embodiments of the present invention are explained in detail based on the drawings:
- Figure 1: Axonometric view of a shelving, with a detail A of the base;
- Figure 2: Axonometric view of a base, and section B of the same base;
- Figure 3: Photograph of a base having spot welding with and without filler material, according to the prior art;
- Figure 4: Axonometric view of a post laser beam welded according to the prior art; the details show a transversal section of the post and the way in which the welding is performed;
- Figure 5: View of a detail of a transversal section of a base, with laser welding performed according to the present invention.

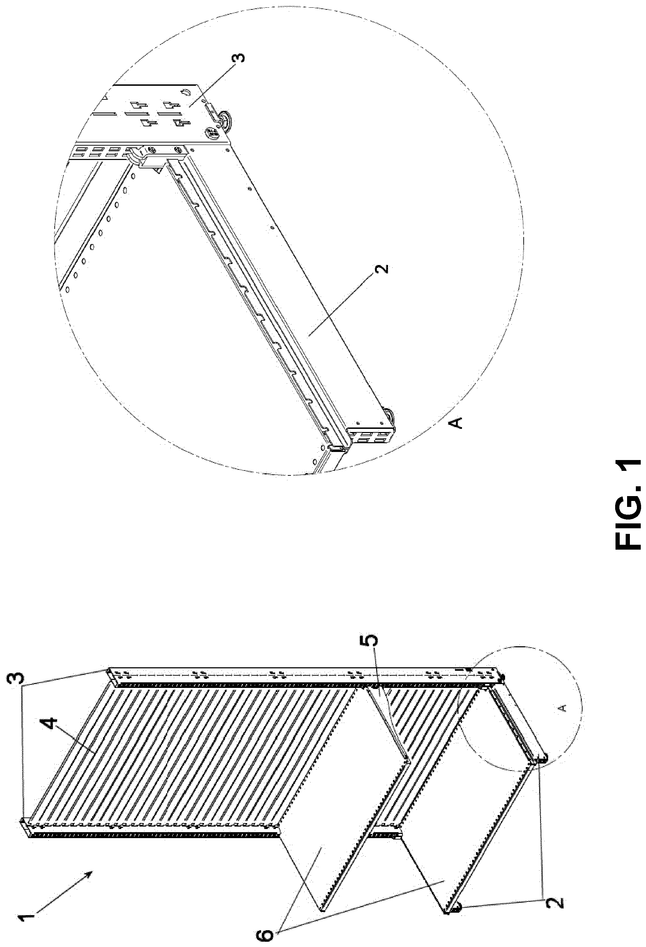

Figure 1 shows a shelving 1 for displaying goods in a point of sale, comprising two bases 2, two posts 3, joined through back panelling modules 4. On the posts 3, pairs of brackets 5 are fixed, which allow to mount a desired number of horizontal shelves 6 for displaying goods. The detail shown in the enlargement A allows to better appreciate the shape of base 2.

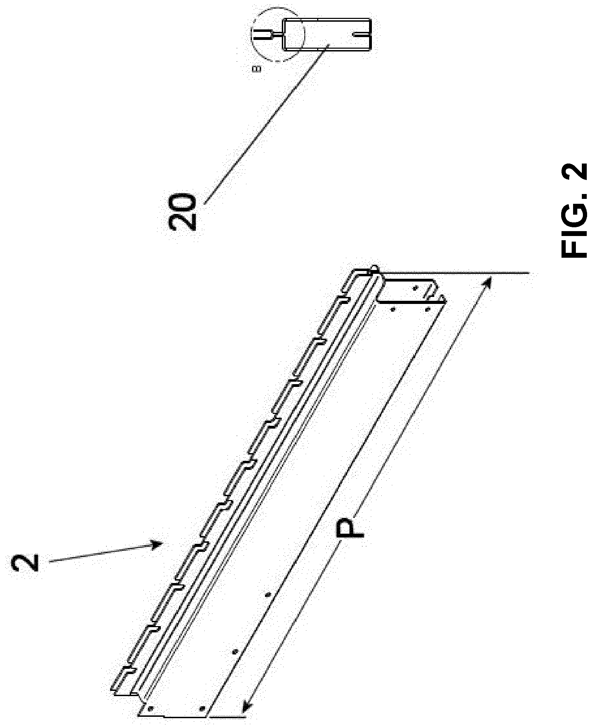

Figure 2 shows in detail the base 2; P is the length of the base 2, i.e. its main dimension. The detail 20 shows the base 2 in a transversal section, and allows to appreciate that, in the preferred embodiment, it is obtained from one metal sheet, suitably bent and welded.

The example illustrated in the figures this extension is essentially parallel to the longitudinal axis of the base 2 which has a tubular or boxed cross section profile.

The longitudinal axis of the base 2 is parallel to the direction P and is also parallel to at least some of the folding axis of the metal sheet.

Part 20 shows a cross section of the base 2 and allows to appreciate how in the preferred embodiment, this base has been formed by only one metallic sheet which has been correspondingly foleded and welded along facing contact surfaces of connection stripes.

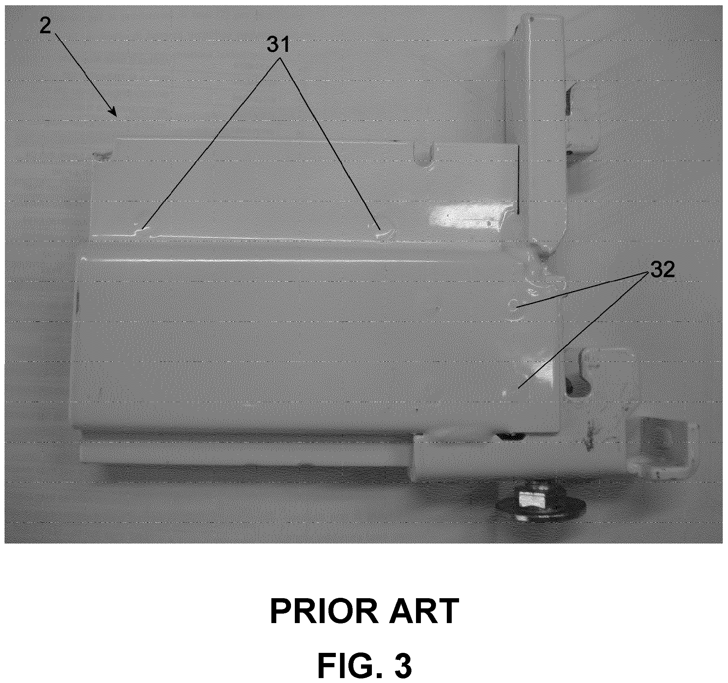

As already explained above, said welding can be a spot welding or a seam welding. Figure 3 shows a photograph of a base 2 manufactured according to the prior art, i.e. through spot welding with or without filler material. In particular, the spot welding 31 are performed without filler material and appear to the eye like small concavities, while the welding 32 are performed with filler material and appear like small convexities.

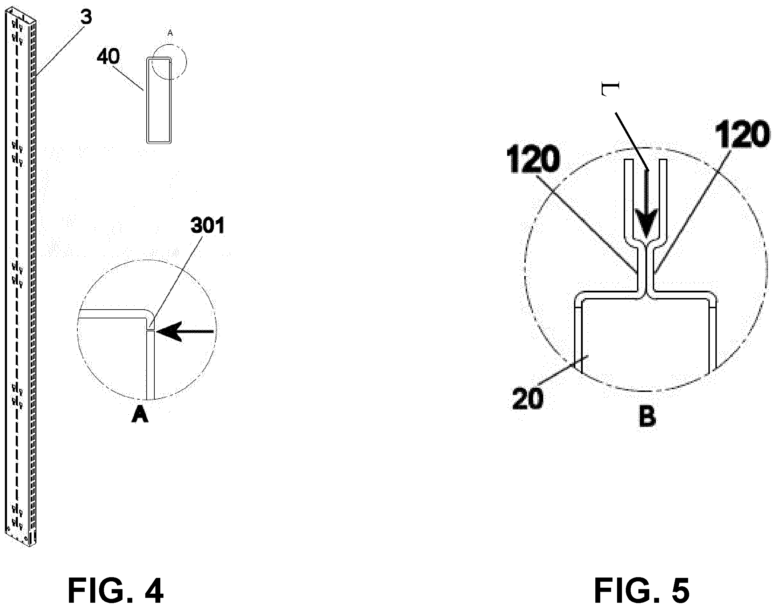

Figure 4 shows a post 3 wherein a seam laser welding is present. The detail 40 shows a transversal section of post 3, wherein the two areas of the metal sheet are bent so as to put them in contact at 301 as shown in enlargement A. The laser beam is directed in a perpendicular direction with respect to the metal sheet according to the direction indicated by the arrow, which is perpendicular to the thickness of the metal sheet itself. This is the typical way to perform a laser beam welding, i.e. bringing in alignment the edges of the part to be welded and then applying the welding action for the entire thickness of the edges of the parts to be bonded together.

Figure 5 shows the present invention: first, the production line suitably bends the metal sheet to obtain the shape shown as detail 20 of Figure 2, that is, about a box-like profile with rectangular cross section, above which a peduncle ends with a U-shape opened towards the top. The peduncle is formed by two facing metal strips 120 which provide each one for a connecting or bonding surface which ahs to be approached done to the other but not necessarily brought into direct contact depending from the welding technique chosen and which has a predetermined length in a direction parallel to the axis of the profiled body or to a folding axis or to a folding edge (direction perpendicular to the drawing sheet) and an extension which is perpendicular to one or more of the said axis and parallel to the arrow shown in figure 5. Second, the welding of the two metal sheet areas is performed directing the laser beam in a direction which is parallel with respect to the extension of the contact surfaces by directing the optical axis of the laser beam perpendicularly to the main extension of the two approached facing strips, i.e. perpendicularly to the longitudinal axis of the three-dimensional body 2 and/or to a folding axis, according to the direction indicated by the arrow. In this way, a welding is obtained that deepens for some mm in the direction indicated by the arrow, indicatively 2-3 mm.

The depth of the welding in the direction of arrow L varies with the contact time between laser beam and counterposed metal sheet areas: as can be easily imagined, the longer the contact time between laser beam and parts to be welded, the deeper the welding in the direction of arrow L. Since the base is manufactured bending and at the same time welding the two counterposed metal sheet areas, the depth of the welding will be a function of the speed at which the production line bends the metal sheet to bring the two surfaces to be welded into contact.

In a preferred embodiment, the welding is performed as a continuous seam welding, for the whole extension of the connecting surfaces in the direction perpendicular to the axis of the three-dimensional element and/or for the whole main extension of the said three-dimensional element 2 and/or in a direction which is perpendicular to a folding axis or to a folding edge.

In combination to the above feature, the welding can be accrued out in a continuous way along the extension of the connecting surfaces parallel to the axis of the three-dimensional body 2 and/or along the main extension for the length P of the base 2. This allows obtaining a base that has a loading capacity higher than that obtainable through the traditional spot welding. Loading tests performed in laboratory have shown that a base 2 manufactured through the traditional spot welding allows to obtain a loading capacity of about 400-1300 kg, while the same base 2 manufactured with seam laser beam welding according to the present invention allows to load around 2000 kg without cracking.

According to an alternative embodiment the welding seam may be discontinuous forming a line of welding zones of a certain length along the connecting or bonding surfaces in the direction of travelling or shift of the laser beam. The distance of the welding zones as also their length in the said traveling or shifting direction or in the direction parallel to the direction of propagation of the beam may be equal for all the welding zones or may be different for at least some welding zones depending from the desired mechanical features of the structure or as a function of the loads to which different sections or parts of the structure has to resist.

Such differences in the areas of the welding zones and in their distance may be easily obtained by:
varying the traveling speed of the laser beam along the connecting or bonding surfaces as a function of the position of the said laser beam in relation to the connecting surfaces along their extension in the direction parallel to the longitudinal axis of the three-dimensional structure 2;
applying a certain frequency for the on/off cycles of the laser beam.

In combination to the above the frequency on/off cycles of the laser beam may also be varied during welding. This leads to welding zones having possibly different length along the longitudinal axis of the element 2 and also having different length in the direction parallel to the axis of the laser beam and further possibly having also different distances between the welding zones along the longitudinal axis of the element 2.

According to an embodiment, the welding zones may have equal distances one from the other or the distances may vary according to a certain pattern. This pattern can be determined as a function of the loads that will be applied to the three-dimensional element in different parts of the said element. The welding zones will be closer to each other or continuous at the parts of the element 2 where the higher loads are locally applied exercising higher intensity forces than in the other parts.

According to a further feature which may be provided alternatively or in combination to the above, the length of the welding zones along the longitudinal axis of the element 2 or along the main extension P or in a direction parallel to a folding axis or a folding edge may be set equal for all the welding zones or may be different for at least some of the welding zones similarly to what has been provided for their distance. In this case the welding zones may be provided having an increased length in the parts of the element 2 where the loads generate forces of higher intensity.

According to still a further embodiment which can be provided separately or in combination to the above, both in the case of discontinuous and continuous welding seams, the dimension of the welding seam may be identical in the direction of the axis of the laser beam, i.e. in the direction perpendicular to the axis of the three-dimensional body and/or to the main extension P and/or to a folding axis or to a folding edge. Alternatively, the dimension of the welding seam in the direction of the axis of the laser beam, i.e. in the direction perpendicular to the axis of the three-dimensional body and/or to the main extension P and/or to a folding axis or to a folding edge may vary along the direction parallel to the axis of the three-dimensional body and/or to the main extension P and/or to a folding axis or to a folding edge.

The above embodiments of the seam may be obtained by varying in time during welding the speed of displacement of the laser beam along the longitudinal axis of the three-dimensional element 2 and/or to the main extension P and/or to a folding axis or to a folding edge or by varying the intensity of the laser beam. It is also possible to combine the said two ways of varying the welding seam.

The discontinuous welding seam may be obtained by providing on/off cycles of the laser beam which may have constant frequency or a variable frequency.

Referring to the above detailed description of the embodiments although for simplicity sake reference has only been made to a laser beam welding technique, the skilled man can easily appreciate that also other alternative welding techniques operating according to different physical phenomena can be used, provided the are apt to generate melting energy in the form of a plasma, a flame, and arc or similar effects and which show an axis of propagation or a spatial energy distribution similar to the laser beam, i.e. with a main direction of orientation or propagation. In this condition, the geometry of the laser beam relatively to the thermic effect causing melting of the material of the contact surfaces and thus the welding will be provided also for its essential features in the further alternative kinds of welding techniques. Thus the same technical effects, mechanisms and functions will be provided also for these alternative techniques except for obvious differences needed in adapting the different techniques to the welding process according to the invention and which are easily identified and carried out by the skilled person without needing to apply inventive skills.
1 shelving
2 base
3 post
4 back panelling
5 brackets
6 shelf
20 transversal section of the base
31 spot welding without filler material
32 spot welding with filler material
40 transversal section of the post
120 facing metal strips according to the invention
301 facing metal strips according to the prior art

## Claims

1. Method for manufacturing components for points of sale shelving (1) or pieces of furniture, said components having a three-dimensional structure with a boxed or tubular cross section being obtained from at least a metal sheet suitably bent along several bent lines and opposed contact surfaces along facing strips of metal sheet or sheets generated by the bending process the two opposed contact surfaces being welded one to the other, **characterized in that**
- the facing surfaces (120) to be joined one to the other extend along two directions defining the said surfaces and the extension of said surfaces along at least one of the said directions is greater than the thickness of the metal sheet;
- the welding action is performed exercising a melting action of the material of the surfaces of the strips to be joined together along a welding axis or direction which is parallel to the facing surfaces (120) of the two strips ,
- Welding being carried out providing shifting speed along a direction transverse to the said welding axis and in the direction of one of the said two directions defining the surfaces to be joined (120) of the two facing strips, so that the melting of the material of the two strips reaches for at least part of the said surfaces along the direction parallel to the said welding axis and for a length greater than the thickness of the metal sheet.

2. Method according to claim 1 in which the welding is carried out using a welding process chosen among the following options: laser welding, plasma welding, TIG welding (Tungsten Inert Gas) GTAW welding (Gas Tungsten Arc Welding), arc welding, AWS welding with or without added material.

3. Method according to claim 1 or 2 in which the strips facing and approached to each other have an extension in a direction which is parallel to at least one bending or folding axis and an extension in a direction which is perpendicular to the at least one folding axis, the said laser beam or the said plasma or the said arc or the said flame being oriented with its axis such that the said axis is parallel to the said surfaces to be joined and perpendicular to at least one folding axis of the metal sheet and being the said laser beam, plasma beam, arc, or flame displaced along the said extension of the surfaces to be joined in a direction parallel to the said folding axis.

4. Method according to one or more of the preceding claims in which the three-dimensional structure is tubular and at least one folding axis is parallel to a longitudinal axis of the said structure, while the contact surfaces are oriented parallel to a radial direction relatively to the said longitudinal axis and parallel to the said longitudinal axis, the welding axis, i.e. the axis along which the melting action is carried out by the electromagnetic beam, the flame, and/or the plasma being also oriented radially relatively to the said longitudinal axis of the three-dimensional structure (2)

5. Method for manufacturing components for points of sale shelving (1) or pieces of furniture according to one or more of the preceding claims, wherein welding is applied substantially at the same time as the bending of the metal sheet or sheets, which is necessary to obtain the three-dimensional structure.

6. Method for manufacturing components for points of sale shelving (1) or pieces of furniture according to one or more of the preceding claims, wherein the length of the welding zone along the welding axis varies according to the contact time of the electromagnetic beam or the plasma, or the arc, or the flame and the counter posed and approached metal sheet or sheets areas, said length increasing with a longer contact time.

7. Method for manufacturing components for points of sale shelving (1) or pieces of furniture according to one of the preceding claims, wherein the welding action is applied in a continuous way for the whole length of the surfaces to be joined together and in the direction being perpendicular to the welding axis or to the axis of propagation of the electromagnetic beam or of the plasma or of the arc or of the flame and/or being perpendicular to a folding axis or to the longitudinal axis of the three-dimensional structure.

8. Method for manufacturing components for points of sale shelving (1) or pieces of furniture according to one of the preceding claims, wherein the welding action is carried out in a discontinuous way for the length of the surfaces to be joined together and in the direction being perpendicular to the welding axis or to the axis of propagation of the electromagnetic beam or of the plasma or of the arc or of the flame and/or being perpendicular to a folding axis or to the longitudinal axis of the three-dimensional structure,, obtaining a plurality of shorter or longer welded traits along the said direction..

9. Method for manufacturing components for points of sale shelving (1) or pieces of furniture according to one of the preceding claims, wherein said component is a base (2) for shelving (1) obtained from at least one metal sheet suitably bent and welded along facing strips of metal sheet or sheets generated by the bending process so as to obtain a three-dimensional structure capable of supporting the shelving (1) itself.

## Patentansprüche

1. Verfahren zur Herstellung von Bauelementen für Regale (1) oder Möbelstücke für Verkaufsorte, wobei die Bauelemente eine dreidimensionale Struktur mit kastenförmigen oder zylindrischen Querschnitt aufweisen und aus mindestens einem Metallblech gebildet werden, das entlang mehrerer Biegelinien und gegenüberliegenden mit dem Biegeverfahren hergestellten Lappen des Metallbleches oder der Metallblechen entlang gegenüberliegende Kontaktflächen passend umgebogen wird, wobei die beiden gegenüberliegenden Kontaktflächen zusammengeschweißt sind,
**dadurch gekennzeichnet, dass**
- die miteinander zu verbindenden gegenüberliegenden Oberflächen (120) sich entlang zweier Richtungen erstrecken, welche die genannten Oberflächen definieren und die Erstreckung der Oberflächen entlang zumindest einer dieser Richtungen größer ist als die Dicke des Metallblechs;
- die Schweißwirkung durchgeführt wird, indem eine Schmelzwirkung des Materials der Oberflächen der miteinander zu verbindenden Lappen entlang einer Schweißachse oder Schweißrichtung durchgeführt wird, die parallel zu den gegenüberliegenden Oberflächen (120) der beiden Lappen ist,
- das Schweißen mit einer Schaltgeschwindigkeit entlang einer Richtung quer zur Schweißachse und in der Richtung einer der beiden Richtungen, die die zu verbindenden Oberflächen (120) der beiden einander zugewandten Lappen definiert, so dass die Schmelzung des Materials der beiden Lappen zumindest einen Teil der genannten Oberflächen entlang der Richtung parallel zur Schweißachse und für eine Länge, die größer als die Dicke des Blechs ist, erreicht.

2. Verfahren nach Anspruch 1, bei dem das Schweißen unter Verwendung eines Schweißverfahrens durchgeführt wird, das unter den folgenden Optionen gewählt wird: Laserschweißen, Plasmaschweißen, WIG-Schweißen (Wolfram-Inertgas) GTAW-Schweißen (Gas-Wolfram-Lichtbogenschweißen), Lichtbogenschweißen, AWS-Schweißen mit oder ohne Zusatzwerkstoff.

3. Verfahren nach Anspruch 1 oder 2, bei dem die einander zugewandten und einander angenäherten Lappen eine Erstreckung in einer Richtung aufweisen, die parallel zu wenigstens einer Biege-oder Faltachse ist, und eine Erstreckung in einer Richtung, die senkrecht zu der wenigstens einen Faltachse ist, wobei der Laserstrahl oder der Plasmastrahl oder der Lichtbogen oder die Flamme mit seiner Achse derart ausgerichtet sind, dass die Achse parallel zu den zu verbindenden Oberflächen und senkrecht zu mindestens einer Faltachse des Metallblechs verläuft und der Laserstrahl, der Plasmastrahl, der Lichtbogen, oder die Flamme entlang der Erstreckung der zu verbindenden Oberflächen in einer Richtung parallel zur Faltachse versetzt sind.

4. Verfahren nach einem oder mehreren der vorhergehenden Ansprüche, wobei die dreidimensionale Struktur rohrförmig ausgebildet ist und zumindest eine Faltachse parallel zu einer Längsachse der Struktur ist, während die Kontaktflächen parallel zu einer radialen Richtung relativ zu dieser Längsachse und parallel zu dieser Längsachse ausgerichtet sind, die Schweißachse, d. H. die Achse, entlang derer die Schmelzung durch den elektromagnetischen Strahl, die Flamme, und/oder das Plasma durchgeführt wird, auch radial relativ zur Längsachse der dreidimensionalen Struktur (2) ausgerichtet ist.

5. Verfahren zur Herstellung von Bauelementen für Regale (1) oder Möbelstücke für Verkaufsorte nach einem oder mehreren der vorhergehenden Ansprüche, wobei das Schweißen im Wesentlichen zeitgleich mit dem Biegen des oder der Metallbleche erfolgt, das notwendig ist, um die dreidimensionale Struktur zu erhalten.

6. Verfahren zur Herstellung von Bauelementen für Regale (1) oder Möbelstücke für Verkaufsorte nach einem oder mehreren der vorhergehenden Ansprüche, wobei die Länge der Schweißzone entlang der Schweißachse entsprechend der Kontaktzeit des elektromagnetischen Strahls oder des Plasmas oder des Lichtbogens oder der Flamme mit dem bzw. den gegenübergestellten und angefahrenen Metallblech bzw. Metallblechbereichen variiert, wobei die Länge mit einer längeren Kontaktzeit zunimmt.

7. Verfahren zur Herstellung von Bauelementen für Regale (1) oder Möbelstücke für Verkaufsorte nach einem der vorhergehenden Ansprüche, wobei die Schweißwirkung kontinuierlich über die gesamte Länge der miteinander zu verbindenden Oberflächen und in Richtung senkrecht zur Schweißachse bzw. zur Ausbreitungsachse des elektromagnetischen Strahls oder des Plasmas oder des Lichtbogens oder der Flamme und/oder senkrecht zu einer Faltachse oder zur Längsachse der dreidimensionalen Struktur aufgebracht wird.

8. Verfahren zur Herstellung von Bauelementen für Regale (1) oder Möbelstücke für Verkaufsorte nach einem der vorhergehenden Ansprüche, wobei die Schweißwirkung diskontinuierlich für die Länge der miteinander zu verbindenden Oberflächen und in Richtung senkrecht zur Schweißachse bzw. zur Ausbreitungsachse des elektromagnetischen Strahls oder des Plasmas oder des Lichtbogens oder der Flamme und/oder senkrecht zu einer Faltachse oder zur Längsachse der dreidimensionalen Struktur aufgebracht wird und dabei mehrerer kürzerer oder längerer Schweißabschnitte entlang dieser Richtung erhalten wird.

9. Verfahren zur Herstellung von Bauelementen für Regale (1) oder Möbelstücke für Verkaufsorte nach einem der vorhergehenden Ansprüche, wobei das Bauelement ist eine Basis (2) für ein Regal (1), die aus mindestens einem Metallblech gebildet wird, das entlang gegenüberliegender Lappen aus Metallblech oder Metallblechen durch das Biegeverfahren geeignet gebogen geschweißt ist, um eine dreidimensionale Struktur zu erhalten, die in der Lage ist, das Regal (1) selbst zu stützen.

## Revendications

1. Procédé de fabrication de composants pour rayonnages (1) ou meubles pour points de vente, lesdits composants possédant une structure tridimensionnelle avec une section transversale tubulaire ou en boîte, obtenue à partir d'au moins une tôle courbée de façon appropriée sur plusieurs lignes de courbure et des surfaces de contact opposées le long de bandes en regard de la ou les tôles générées par le procédé de courbure, les deux surfaces de contact opposées étant soudées l'une à l'autre, **caractérisé en ce que**
- les surfaces (120) en regard à unir s'étendent le long de deux directions définissant lesdites surfaces, et l'étendue desdites surfaces le long d'au moins l'une desdites directions est supérieure à l'épaisseur de la tôle ;
- l'action de soudage est effectuée par une action de fusion du matériau des surfaces des bandes à unir le long d'un axe ou d'une direction de soudage qui est parallèle aux surfaces (120) en regard des deux bandes,
- le soudage étant effectué à une vitesse de translation le long d'une direction transversale audit axe de soudage et dans la direction de l'une desdites deux directions définissant les surfaces à unir (120) des deux bandes en regard, de façon que la fusion du matériau des deux bandes s'étende pour au moins une partie desdites surfaces le long de la direction parallèle audit axe de soudage et sur une longueur supérieure à l'épaisseur de la tôle.

2. Procédé selon la revendication 1, dans lequel le soudage est effectué par un procédé de soudage choisi parmi les options suivantes : soudage laser, soudage au plasma, soudage TIG (Tungsten Inert Gas), soudage GTAW (Gas Tungsten Arc Welding), soudage à l'arc, soudage AWS avec ou sans matériau d'apport.

3. Procédé selon la revendication 1 ou 2, dans lequel les bandes en regard et rapprochées l'une à l'autre ont une étendue dans une direction parallèle à au moins un axe de courbure ou de pliage et une étendue dans une direction perpendiculaire à l'au moins un axe de pliage, ledit faisceau laser ou ledit plasma ou ledit arc ou ladite flamme étant orientés avec leur axe de façon que ledit axe soit parallèle auxdites surfaces à unir et perpendiculaire à au moins un axe de pliage de la tôle, et ledit faisceau laser, plasma, arc ou flamme étant déplacés le long de ladite étendue des surfaces à unir dans une direction parallèle audit axe de pliage.

4. Procédé selon l'une ou plusieurs des revendications précédentes, dans lequel la structure tridimensionnelle est tubulaire et au moins un axe de pliage est parallèle à un axe longitudinal de ladite structure, les surfaces de contact étant orientées parallèles à une direction radiale par rapport audit axe longitudinal et parallèles audit axe longitudinal, l'axe de soudage, c'est-à-dire l'axe le long duquel l'action de soudage est effectuée par le faisceau électromagnétique, la flamme et/ou le plasma étant aussi orienté dans une direction radiale par rapport audit axe longitudinal de la structure tridimensionnelle (2).

5. Procédé de fabrication de composants pour rayonnages (1) ou meubles pour points de vente selon l'une ou plusieurs des revendications précédentes, dans lequel le soudage est effectué sensiblement en même temps que la courbure de la ou les tôles, nécessaire à obtenir la structure tridimensionnelle.

6. Procédé de fabrication de composants pour rayonnages (1) ou meubles pour points de vente selon l'une ou plusieurs des revendications précédentes, dans lequel la longueur de la zone de soudage le long de l'axe de soudage varie en fonction du temps de contact du faisceau électromagnétique ou du plasma ou de l'arc ou de la flamme avec les tôles ou zones de tôle opposées et rapprochées, ladite longueur augmentant de façon directement proportionnelle au temps de contact.

7. Procédé de fabrication de composants pour rayonnages (1) ou meubles pour points de vente selon l'une des revendications précédentes, dans lequel l'action de soudage est effectuée de façon continue sur toute la longueur des surfaces à unir et dans la direction perpendiculaire à l'axe de soudage ou à l'axe de propagation du faisceau électromagnétique ou du plasma ou de l'arc ou de la flamme et/ou perpendiculaire à un axe de pliage ou à l'axe longitudinal de la structure tridimensionnelle.

8. Procédé de fabrication de composants pour rayonnages (1) ou meubles pour points de vente selon l'une des revendications précédentes, dans lequel l'action de soudage est effectuée de façon discontinue sur la longueur des surfaces à unir et dans la direction perpendiculaire à l'axe de soudage ou à l'axe de propagation du faisceau électromagnétique ou du plasma ou de l'arc ou de la flamme et/ou perpendiculaire à un axe de pliage ou à l'axe longitudinal de la structure tridimensionnelle, de façon à obtenir une pluralité de soudures plus ou moins longues le long de ladite direction.

9. Procédé de fabrication de composants pour rayonnages (1) ou meubles pour points de vente selon l'une des revendications précédentes, dans lequel ledit composant est une base (2) de rayonnage (1) obtenu à partir d'au moins une tôle courbée de façon appropriée et soudée le long de bandes en regard d'une ou plusieurs tôles générées par le procédé de courbure, de façon à obtenir une structure tridimensionnelle capable de supporter le rayonnage (1) .
